(19)

Europäisches Patentamt

European Patent Office

Office européen des brevets

(11) **EP 4 096 050 A1**

(12) **EUROPEAN PATENT APPLICATION**

(43) Date of publication:
**30.11.2022 Bulletin 2022/48**

(21) Application number: **21425027.6**

(22) Date of filing: **24.05.2021**

(51) International Patent Classification (IPC):
**H02J 3/46** *(2006.01)* **H02J 3/28** *(2006.01)*

(52) Cooperative Patent Classification (CPC):
**H02J 3/28; H02J 3/46**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ANSALDO ENERGIA S.p.A.**
**16152 Genova (IT)**

(72) Inventors:
• **Repetto, Enrico**
 **16152 Genova (IT)**
• **Giacchino, Alessandro**
 **16152 Genova (IT)**

(74) Representative: **Andreotti, Erika et al**
**Studio Torta S.p.A.**
**Via Viotti, 9**
**10121 Torino (IT)**

(54) **PLANT FOR THE PRODUCTION OF ELECTRICAL ENERGY AND METHOD FOR OPERATING SAID PLANT**

(57) A hybrid plant for the production of electrical energy and configured to be connected to an electrical grid (2); the hybrid plant (1) comprising:

at least one programmable energy source (4);

at least one energy storage assembly (5) configured to selectively store or release electrical energy;

a control device (8) configured to:

✔ calculate a plant net load reference value (NETLoadRef) on the basis of the requirements of the grid (2);

✔ calculate a required load variation (Δload) on the basis of the plant net load reference value (NETLoadRef) and on the basis of a current net load (CNL) supplied to the grid (2);

✔ calculate at least one programmable energy source reference load (PLRef1, PLRef2, ...PLRefn) on the basis of the required load variation (Δload) and taking into account the load limits and/or the gradient load limits of the at least one programmable energy source (4);

✔ calculate a reference integrating load (RIL) so as to obtain the calculated required load variation (Δload), if the at least one programmable energy source (4) is not able to satisfy the required load variation (Δload);

✔ control the storage assembly (5) so as to selectively release the calculated reference integrating load (RIL) if the at least one programmable energy source reference load (PLRef1, PLRef2, ...PLRefn) is lower than the plant net load reference value (NETLoadRef) or to store the calculated reference integrating load (RIL) if the at least one programmable energy source reference load (PLRef1, PLRef2, ...PLRefn) is greater than the plant net load reference value (NETLoadRef).

FIG. 1

**EP 4 096 050 A1**

**Description**

TECHNICAL FIELD

The present invention relates to a plant for the production of electrical energy and a method for operating said plant.

BACKGROUND

Known to the art are hybrid plants for the production of electrical energy, which are connected to an electrical distribution grid.

The hybrid solutions combine different sources of energy and storage within the same plant, keeping a single point of interconnection with the electrical grid.

Hybrid plants normally comprise at least one programmable energy source (like a gas turbine supplied with at least one fossil fuel) and a storage system. Often, hybrid plants comprise also renewable energy sources, like photovoltaic plants, wind farms, geothermal plants, and/or other types of energy sources, like gas engines, solar CSP solutions, etc.

Managing in real time these different kind of energy sources is not simple as the behaviour of each one of these energy sources can be completely different one from another.

Power plants comprising different programmable and non-programmable energy sources can cause severe management issues for the operators of the power plant.

Flexibility of the traditional programmable power sources is essential as the contribution of the renewable energy sources is volatile. Moreover, renewable energy sources are also often characterized by a high concentration of power production in some periods, not always predictable.

Hybrid plants have to guarantee a stable and reliable connection to the electrical distribution network in all operating conditions and taking into account all the peculiarities above described.

In particular, it is fundamental to properly react to transient situations in which a fast and significant variation of the energy produced by the plant is required to counterbalance the variation of the frequency of the electrical grid.

Therefore, in hybrid plants it is required to carry out grid adjustment interventions and responding to extremely variable load requests with a very dynamic response and, at the same time, to optimize the use of the storage system to provide multiple services, while minimizing its exploitation to preserve its limited capacity.

SUMMARY

The object of the present invention is therefore to provide a hybrid plant for the production of electrical energy wherein the different energy sources are properly managed in order to obtain an improved flexibility and power capacity of the plant.

According to said object, the present invention relates to a hybrid plant for the production of electrical energy and configured to be connected to an electrical grid; the hybrid plant comprising:

at least one programmable energy source;
at least one energy storage assembly configured to selectively store or release electrical energy;
a control device configured to:

✓ calculate a plant net load reference value on the basis of the requirements of the grid;
✓ calculate a required load variation on the basis of the plant net load reference value and on the basis of a current net load supplied to the grid;
✓ calculate at least one programmable energy source reference load on the basis of the required load variation and taking into account the load limits and/or the gradient load limits of the at least one programmable energy source;
✓ calculate a reference integrating load so as to obtain the calculated required load variation, if the at least one programmable energy source is not able to satisfy the required load variation;
✓ control the storage assembly so as to selectively release the calculated reference integrating load if the at least one programmable energy source reference load is lower than the plant net load reference value or to store the calculated reference integrating load if the at least one programmable energy source reference load is greater than the plant net load reference value.

Advantageously, the control device of the hybrid plant according to the present invention is configured to manage the at least one programmable energy source and the storage assembly in an optimized way to satisfy the grid requirements for the frequency stabilization and/or to correct load unbalances.

In particular, the management of the storage assembly according to the present invention is a key factor to strongly increase the plant flexibility.

According to the present invention, in fact, the total load demand is distributed among the sources such that their load variation is performed in optimal manner at the same time.

The use of the storage assembly is bidirectional such to provide both sudden power increase or decrease depending on the specific load variation request.

It is a further object of the present invention to provide a method for operating a hybrid plant for the production of electrical energy which is able to manage the different energy sources so as to obtain an improved flexibility and power capacity of the plant.

According to said object, the present invention relates to a method for operating a hybrid plant for the production of electrical energy as claimed in claim 13.

BRIEF DESCRIPTION OF THE DRAWINGS

The present invention will now be described with reference to the accompanying drawings, which illustrate some non-limitative embodiment, in which:

- Figure 1 is a schematic representation of the hybrid plant according to the present invention;
- Figure 2 is a schematic block diagram of a first detail of the hybrid plant of figure 1;
- Figure 3 is a schematic flow chart of a detail of the method for operating the hybrid plant according to the present invention.

DETAILED DESCRIPTION OF EXEMPLARY EMBODIMENTS

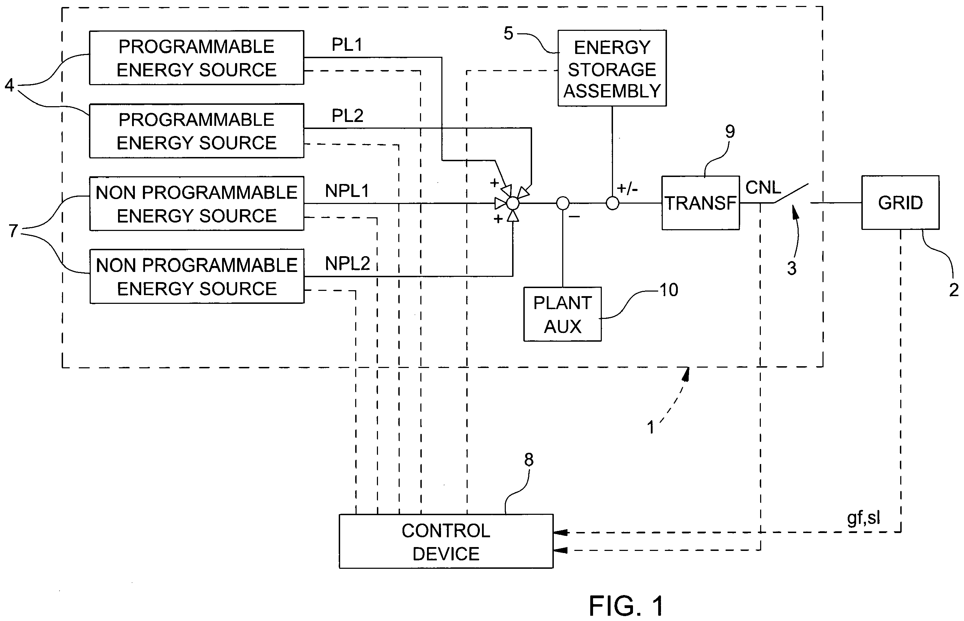

In figure 1 reference numeral 1 indicates a hybrid plant for the production of electrical energy and configured to be connected to an electrical grid 2 for supplying the electrical energy produced to the electrical grid 2. Preferably, the hybrid plant 1 is connected to the grid 2 by a controlled electrical breaker 3, schematically represented in figure 1.

The hybrid plant 1 comprises at least one programmable energy source 4 and at least one energy storage assembly 5.

The programmable energy source 4 is configured to produce a predictable amount of electrical energy.

Preferably, the hybrid plant 1 comprises also at least one non-programmable energy source 7.

The amount of energy produced by the non-programmable energy source 7 is not predictable.

In the non-limiting example here disclosed and illustrated, the hybrid plant 1 comprises a plurality of programmable energy sources 4.

Each programmable energy source 4 is provided with a respective generator (not illustrated) able to produce respective load PL1, PL2, ...PLn.

Each programmable energy source 4 is configured to produce electrical energy on the basis of a programmable load reference value PLRef1, PLRef2, ...PLRefn.

Preferably, at least one of the plurality of programmable energy sources 4 is a gas turbine assembly.

In the non-limiting example here disclosed and illustrated the programmable energy sources 4 are two gas turbine assemblies.

Each gas turbine assembly comprises a compressor, a combustor, a turbine and a generator (not illustrated).

In particular, the compressor comprises an inlet, supplied with air, and a plurality of blades compressing the passing air. The compressed air leaving the compressor flows into a plenum, i.e. a closed volume, and from there into the combustor, where the compressed air is mixed with at least one fuel and combusted. The resulting hot gas leaves the combustor unit and is expanded in the turbine, producing mechanical work on a shaft connected to the generator.

According to a variant not shown, at least one of the programmable energy sources 4 can be an internal combustion engine or a coal fired or hydroelectric power generation unit.

The energy storage assembly 5 comprises at least one energy storage device (not illustrated) configured to selectively store or release energy. In the non-limiting example here disclosed and illustrated, the energy storage device is a battery.

According to a variant not shown, the energy storage assembly 5 can be an electro-chemical storage system or a $CO_2$ storage system.

In the non-limiting example here disclosed and illustrated, the hybrid plant comprises a plurality of non-programmable energy sources 7, each of which is configured to produce a non-predictable load NPL1, NPL2, ....NPLn.

Preferably, at least one of the plurality of non-programmable energy sources 7 is a steam turbine assembly operating in natural sliding pressure.

In the non-limiting example here disclosed and illustrated the non-programmable energy sources 7 are two: a steam turbine assembly and a renewable energy source.

The steam turbine assembly comprises at least one heat boiler and at least one steam turbine (not illustrated).

The heat boiler is configured to exploit the heat from a hot gas stream for producing steam, which is used to drive the steam turbine producing mechanical work on a shaft connected to a generator.

In the non-limiting example here disclosed and illustrated, the heat boiler of steam turbine assembly is supplied with the hot gas flow coming from the gas turbines of the programmable energy sources 4. Therefore, the operation of the steam turbine assembly closely depends on the operating conditions of the gas turbine assembly because the exhaust gas provides the thermal energy needed for steam production.

Typically, the number of heat boilers equals the number of gas turbines of the plant. In the example here disclosed and illustrated, therefore, the steam turbine assembly comprises two heat boilers exploiting the exhaust gas coming from the two gas turbine assemblies 4.

The hybrid plant 1 comprises also a control device 8 configured to control the operating conditions of the hybrid plant 1 on the basis of the demand of the grid 2, a transformer 9 configured to transform the electrical energy produced by the hybrid plant 1 into electrical energy having the requirements of the grid 2 (e.g. having a higher voltage) and a plurality of auxiliary devices 10 (schematically illustrated as a unit).

Auxiliary devices 10 are devices such as pumps, valves, fans, etc., which are electrically fed and designed to assist the energy production of the programmable energy sources 4, the non-programmable energy sources 7, the energy storage assembly 5, etc.

As schematically represented in figure 1, the energy produced by the programmable energy sources 4 (PL1, PL2) and, if present, the energy produced by the non-programmable energy sources 7 (NPL1, NPL2) is supplied to the transformer 9.

As detailed better in the following, the transformer 9 can be supplied also with the energy released by the energy storage assembly 5, if the requirements of the grid 2 demands it.

The transformer 9 supplies to the grid 2 a current NET load CNL.

The current Net load CNL is obtained by the difference between the current gross load CGL supplied by the programmable energy sources 4, by the non-programmable energy sources 7 and by the energy storage assembly 5 and the load absorbed by the auxiliary devices 10.

In other words, the current net load CNL supplied to the grid 2 is the result of the following formulas:

```
(1)  Current gross load (CGL) = (programmable current loads)

     + (non-programmable current loads) + (energy storage

     load)                                           .


                                                           .


(2)  Current Net load (CNL) = Current gross load (CGL) -

     (auxiliary consumption).
```

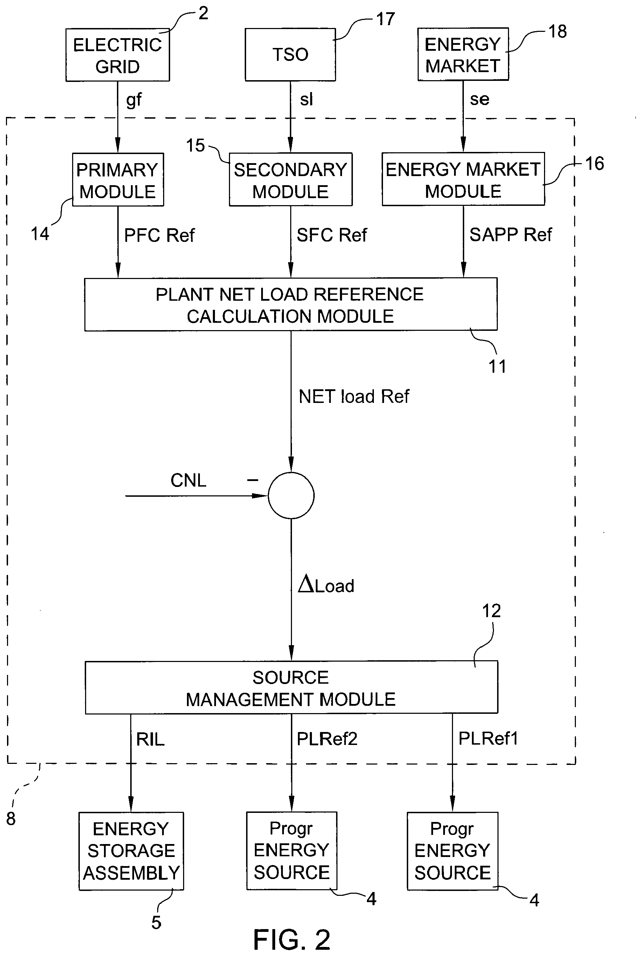

With reference to figure 2, the control device 8 is configured to perform an optimized managing of the different sources of power in order to satisfy the variable load demand from the grid 2.

In detail, the control device 8 comprises a plant net load reference calculation module 11, configured to calculate a plant net load reference value NETLoadRef on the basis of the requirements of the grid 2, and a source managing module 12, which is configured to manage the different programmable energy sources 4 and the energy storage assembly 5, at least on the basis of the plant net load reference value NETLoadRef and on the basis of the current Net load CNL.

The net load reference calculation module 11 calculates a plant net load reference value NETLoadRef taking into account the load requirements of the grid 2.

The requirements of the grid 2 are calculated by a primary module 14 and/or a secondary module 15 and/or an energy market module 16.

The primary module 14 is configured to calculate a primary reference load PFC REF of the current net load on the basis of the frequency gf of the grid 2 with the purpose to stop the frequency deviation from the reference value (e.g. 50Hz).

Preferably, the primary module 14 is configured to calculate a primary reference load PFC REF so as to perform the plant primary frequency control. In other words, the primary module 14 is configured to calculate a primary reference load PFC REF so as to obtain an automatic regulation performed by the plant sources.

The secondary module 15 is configured to calculate a secondary reference load SFC REF on the basis of the level signal received by a Transmission System Operator (TSO) 17 of the electrical grid 2. The Transmission System Operator (TSO) is an entity entrusted with transporting energy in the form of electrical power on a national or regional level, using fixed infrastructure.

The secondary module 15 is configured to perform the plant secondary frequency control which consists of a centralized automatic control that allows to the control area (i.e. the national one) to increase or decrease its total power generation in order to satisfy the power exchanges with the near control areas on the programmed values, also contributing to the control of the grid frequency.

The energy market module 16 is configured to calculate an energy reference load profile SAPP Ref on the basis of the energy sold se by the plant 1 to the energy market 18.

The calculator module 11 is configured to calculate the plant net load reference value NETLoadRef on the basis of the data provided by the primary module 14 and/or by the secondary module 15 and/or by the energy market module 16.

In order to calculate the effective load variation needed by the plant 1, the plant net load reference value NETLoadRef shall be corrected by taking into account the current net load CNL supplied to the grid 2 by the plant 1.

In other words, the required load variation $\Delta$load is calculated as the difference between the plant net load reference value NETLoadRef and the current net load CNL.

As already detailed before the current net load CNL is defined by the formula (2).

The source management module 12 is configured to provide programmable load reference PLRef1, PLRef2, ...PLRefn to the programmable energy sources 4 and, if needed, a reference integrating load RIL to the storage assembly 5.

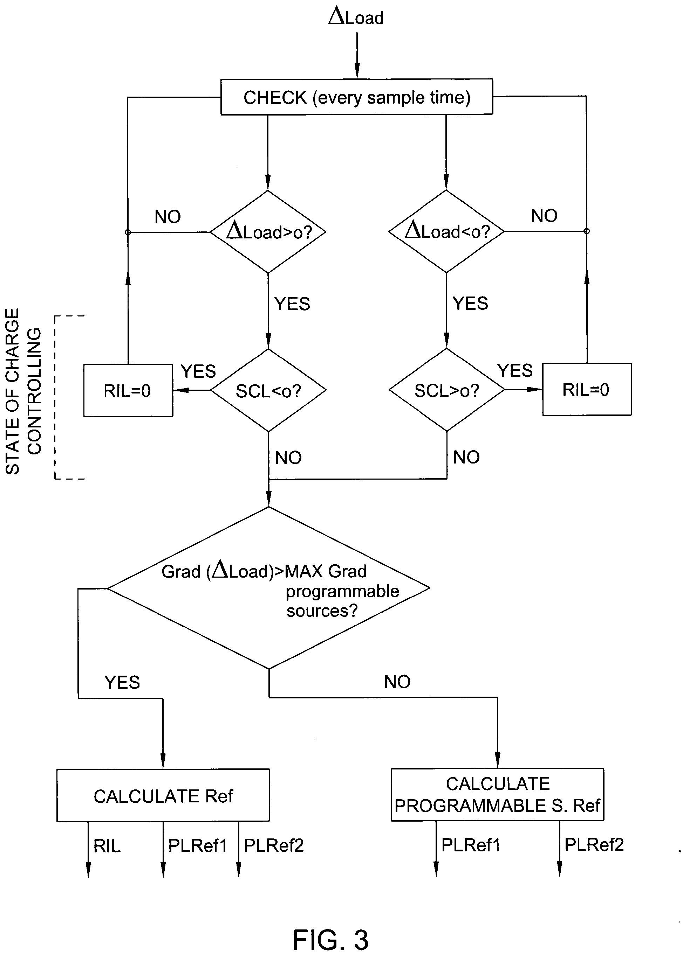

With reference to the flow chart of figure 3, before calculating programmable load reference PLRef1, PLRef2, ...PLRefn, the source management module 12 is configured to:

✓ check if the required load variation $\Delta$load is different from zero;

✓ if the required load variation $\Delta$load is different from zero, check the storage current load SCL of the energy storage assembly 5;

✓ if the required load variation $\Delta$load is greater than zero and if the storage current load SCL of the energy storage assembly 5 is lower than zero, control the energy storage assembly 5 so as to release energy until the storage current load SCL equal to zero is reached;

✓ if the required load variation $\Delta$load is lower than zero and if the storage current load SCL is greater than zero, control the energy storage assembly 5 so as to store energy until the storage current load SCL to zero is reached;

✓ calculate again the required load variation $\Delta$load on the basis of the requirements of the grid 2 and on the basis of the current load supplied to the grid (2).

In this way, the source management module 12 performs a sort of control of the state of charge of the energy storage assembly 5 in order to guarantee that the energy storage assembly 5 be able to react properly in case of need.

In other words, it is important to keep the state of charge of the energy storage assembly 5 in an intermediate condition that allows at any time a proper release or storage of energy.

The step of controlling the energy storage assembly 5 so as to store or release energy until the storage current load SCL to zero is reached, is performed by providing a reference integrating load RIL to the energy storage assembly 5, which is equal to the requested state of charge. In other words the variation of the reference integrating load $\Delta$RIL is calculated by modifying the storage current load SCL and has negative sign (-) in case of storing energy and positive sign (+) in case of releasing energy.

The step of controlling the energy storage assembly 5 is performed if the programmable sources assembly does not require the storage assembly contribution to satisfy the grid requirements (primary frequency control, secondary frequency control, energy market control).

The step of calculating programmable load reference PLRef1, PLRef2, ...PLRefn to the programmable energy sources 4 and a reference integrating load RIL to the storage assembly 5 comprises:

- checking if the programmable energy sources 4 are able to satisfy the required load variation $\Delta$load;
- calculating the programmable energy source reference loads PLRef1, PLRef2 on the basis of the required load variation $\Delta$load and taking into account the load limits and/or the gradient load limits of the one programmable energy sources 4; in particular, the programmable energy source reference loads PLRef1, PLRef2 are calculated exploiting the maximum gradient reachable by the programmable energy sources 4; if the programmable energy sources 4 are not able to satisfy the required load variation $\Delta$load, calculating a reference integrating load RIL for the energy storage assembly 5 so as to obtain the calculated required load variation $\Delta$load;

- if the programmable energy sources 4 are able to satisfy the required load variation Δload, no reference integrating load RIL is calculated.

The calculation of the programmable energy source reference loads PLRef1, PLRef2, ...PLrefn and the calculation of the integrating load RIL is substantially made by calculating a variation of the programmable energy source reference loads ΔPLRef1, ΔPLRef2 ... ΔPLrefn and of the integrating load ΔRIL on the basis of the calculated required load variation Δload and then adding the calculated variation of the programmable energy source reference loads ΔPLRef1, ΔPLRef2 ... ΔPLrefn and of the integrating load ΔRIL to the temporally previous programmable energy source reference loads PLRef1 (t-1), PLRef2 (t-1) ,... PLrefn (t-1) and of the integrating load RIL(t-1) stored in a storing unit (not illustrated).

Once calculated the reference integrating load RIL, the control device 8 is further configured to control the programmable energy sources 4 so as to follow the programmable energy source reference load PLRef1, PLRef2, .. PLrefn and to control the storage assembly 5 so as to selectively increase the calculated reference integrating load RIL of a ΔRIL value if the sum of the programmable energy source reference load variations ΔPLRef1, ΔPLRef2,... ΔPLrefn is lower than the required load variation Δload or to decrease the calculated reference integrating load RIL of a ΔRIL value if the sum of the programmable energy source reference load variations ΔPLRef1, ΔPLRef2,... ΔPLrefn is greater than the required load variation Δload.

The step of checking if the programmable energy sources 4 are able to satisfy the required load variation Δload comprises:

- checking the gradient of the required load variation grad (Δload) ;
- if the gradient of the required load variation grad (Δload) is lower than or equal to the sum of the maximum gradients reachable by each programmable energy source 4, the programmable energy sources 4 are able to satisfy required load variation Δload;
- if the gradient of the required load variation Δload grad (Δload) is greater than the sum of the maximum gradients reachable by each programmable energy source 4 the programmable energy sources 4 are not able to satisfy the required load variation Δload.

The step of calculating the programmable energy source reference loads PLRef1, PLRef2 on the basis of the required load variation Δload comprises:

- if the programmable energy sources 4 are able to satisfy the required load variation Δload, calculating the programmable load references variations ΔPLRef1, ΔPLRef2,.. ΔPLrefn in order to obtain the required load variation Δload and then calculating the programmable load reference values PLRef1, PLRef2, ...PLRefn on the basis of said programmable load references variations ΔPLRef1, ΔPLRef2,.. ΔPLrefn;
- if the programmable energy sources 4 are not able to satisfy the required load variation Δload, calculating the maximum reachable programmable load references variations ΔPLRef1, ΔPLRef2,.. ΔPLrefn and then the programmable load reference values PLRef1, PLRef2, ...PLRefn on the basis of said programmable load references variations ΔPLRef1, ΔPLRef2,.. ΔPLrefn.

In this way, the source management module 12 is configured to calculate the programmable load reference values PLRef1, PLRef2, .. PLRefn exploiting the maximum gradient reachable by the each programmable energy source 4 taking into account, for each programmable energy source 4, also the limits in terms of maximum or minimum load admissible and in terms of the maximum increasing or decreasing gradient obtainable.

In the non-limiting example here disclosed and illustrated wherein the programmable energy sources 4 are gas turbine assemblies, the calculated gas turbine load reference value takes into account the limits of each gas turbine assembly. The maximum admissible load and the minimum admissible load are normally predefined according to the type of gas turbine assembly and are supplied manually by an operator during the initial basic settings entry operations. Analogously, the maximum increasing or decreasing gradient obtainable by the gas turbine assembly is normally predetermined and is manually supplied by an operator during the initial basic settings entry operations.

In other words, the storage assembly 5 is configured to participate to the load supply to the grid 2 only if the programmable energy sources 4 are not sufficient to react properly to the load requirements of the grid 2. In this way, the energy storage assembly 5 is used only if the programmable energy sources 4 are not sufficient to satisfy the load profile needed by the grid 2.

When the energy storage assembly 5 intervenes, its load variation is, as soon as possible, compensated in order to bring the stored energy close to its nominal status of charge.

This allow to preserve the duration of the energy storage system 5.

Advantageously, the plant managing module 12 distributes the required load variation Δload between the available energy sources (at least one programmable energy source 4 and an energy storage system 5) to optimize the plant response to the requirements of the grid 2.

Essentially, the plant managing module 12 is configured to limit the use of the storage assembly 5 for fast load variations to maximize its runtime and minimize its life consumption.

Advantageously, the control device 8 is configured to manage all the energy sources to react to the requirements of the grid 2. In particular, the requirements of the grid 2 comprises also the primary frequency control, which is normally managed by the programmable energy source only, as common current practice.

This allow to avoid, for example, the common limitation of the gas turbine assembly 4 by setting aside a primary reserve of load for the primary frequency control.

Thanks to the present invention, the primary frequency reserve is assigned to the energy storage assembly 5 and only in case the energy storage assembly 5 reaches its full charge or full discharge conditions, the primary frequency reserve is transferred to the gas turbine assembly 4 in a bumpless way.

In other words, thanks to the fact that the primary frequency reserve is assigned to the energy storage device 5 the exploitable operating range of the gas turbine assembly 4 is extended from the minimum to the maximum technical load allowing an augmented power contribution to the grid 2.

Finally, it is clear that modifications and variants can be made to the plant and to the method described herein without departing from the scope of the present invention, as defined in the appended claims.

**Claims**

1. A hybrid plant for the production of electrical energy and configured to be connected to an electrical grid (2); the hybrid plant (1) comprising:

   at least one programmable energy source (4);
   at least one energy storage assembly (5) configured to selectively store or release electrical energy;
   a control device (8) configured to:

   ✓ calculate a plant net load reference value(NETLoadRef) on the basis of the requirements of the grid (2);
   ✓ calculate a required load variation (∆load) on the basis of the plant net load reference value (NETLoadRef) and on the basis of a current net load (CNL) supplied to the grid (2);
   ✓ calculate at least one programmable energy source reference load (PLRef1, PLRef2, ...PLRefn) on the basis of the required load variation (∆load) and taking into account the load limits and/or the gradient load limits of the at least one programmable energy source (4);
   ✓ calculate a reference integrating load (RIL) so as to obtain the calculated required load variation (∆load), if the at least one programmable energy source (4) is not able to satisfy the required load variation (∆load);
   ✓ control the storage assembly (5) so as to selectively release the calculated reference integrating load (RIL) if the at least one programmable energy source reference load (PLRef1, PLRef2, ...PLRefn) is lower than the plant net load reference value (NETLoadRef) or to store the calculated reference integrating load (RIL) if the at least one programmable energy source reference load (PLRef1, PLRef2, ...PLRefn) is greater than the plant net load reference value (NETLoadRef).

2. Hybrid plant according to claim 1, wherein the control device (8), before calculating a programmable energy source reference load, is configured to :

   ✓ check the storage current load (SCL) of the energy storage assembly (5);
   ✓ if the required load variation (∆load) is greater than zero and if the storage current load (SCL) of the energy storage assembly (5) is lower than zero, control the storage assembly (5) so as to release energy until the storage current load (SCL) equal to zero is reached;
   ✓ if the required load variation (∆load) is lower than zero and if the storage current load (SCL) is greater than zero, control the storage assembly so as to store energy until the equal to zero is reached;
   ✓ calculate again the required load variation (∆load) on the basis of the requirements of the grid (2) and on the basis of the current net load (CNL) supplied to the grid (2).

3. Hybrid plant according to anyone of the foregoing claims, wherein the control device (8) is configured to calculate the at least one programmable energy source reference load (PLRef1, PLRef2, ...PLRefn) exploiting the maximum gradient reachable by the at least one programmable energy source (4).

4. Hybrid plant according to anyone of the foregoing claims, wherein the at least one programmable energy source (4) comprises a gas turbine assembly.

5. Hybrid plant according to anyone of the foregoing claims, wherein the at least one programmable energy source (4) comprises an internal combustion engine.

6. Hybrid plant according to anyone of the foregoing claims, comprising at least one non-programmable energy source (7), which produces a non-predictable load contributing to the current net load (CNL) supplied to the grid (2).

7. Hybrid plant according to claim 6, wherein the at least one non-programmable energy source (7) comprises at least one steam turbine assembly.

8. Hybrid plant according to claim 6 or 7, wherein the at least one non-programmable energy source (7) comprises at least one renewable energy source.

9. Hybrid plant according to anyone of the foregoing claims, comprising auxiliary devices (10) which are supplied electrically and are configured to assist the energy production; wherein the control device (8) is configured to calculate the required load variation (Δload) also taking into account the energy absorbed the auxiliary devices (10).

10. Hybrid plant according to anyone of the foregoing claims, wherein the control device (8) is configured to calculate the requirements of the grid (2) by means of at least one primary module (14) configured to calculate a primary load reference (PFC Ref) of the plant load on the basis of the frequency (gf) of the grid (2).

11. Hybrid plant according to claim 10, wherein the control device (8) is configured to calculate the requirements of the grid (2) also by means of a secondary module (15) configured to calculate a secondary load reference (SFC Ref) of the plant load on the basis of a level signal (sl) received by a Transmission System Operator (TSO) of the electrical grid (2).

12. Hybrid plant according to claim 10 or 11, wherein the control device (8) is configured to calculate the requirements of the grid (2) also by means of an energy market module (16) configured to calculate an energy reference load profile (SAPP Ref) on the basis of the energy sold on the energy market (se).

13. Method for operating an hybrid plant for the production of electrical energy; wherein the hybrid plant (1) is configured to be connected to an electrical grid (2) and comprises at least one programmable energy source (4) and at least one energy storage assembly (5) configured to selectively store or release electrical energy;
the method comprising the steps of:

   ✓ calculating a plant net load reference value(NETLoadRef) on the basis of the requirements of the grid (2);
   ✓ calculating a required load variation (Δload) on the basis of the plant net load reference value (NETLoadRef) and on the basis of a current net load(CNL) supplied to the grid (2);
   ✓ calculating at least one programmable energy source reference load (PLRef1, PLRef2, ...PLRefn) on the basis of the required load variation (Δload) and taking into account the load limits and/or the gradient load limits of the at least one programmable energy source (4);
   ✓ calculating a reference integrating load (RIL) so as to obtain the calculated required load variation (Δload), if the at least one programmable energy source (4) is not able to satisfy the required load variation (Δload);
   ✓ controlling the energy storage assembly (5) so as to selectively release the calculated reference integrating load (RIL) if the at least one programmable energy source reference load (PLRef1, PLRef2, ...PLRefn) is lower than the plant net load reference value(NETLoadRef) or to store the calculated reference integrating load (RIL) if the at least one programmable energy source reference load (PLRef1, PLRef2, ...PLRefn) is greater than the plant net load reference value(NETLoadRef).

14. Method according to claim 13, comprising, before calculating a programmable energy source reference load, the steps of:

   ✓ checking the storage current load (SCL) of the energy storage assembly (5) ;
   ✓ if the required load variation (Δload) is greater than zero and if the storage current load (SCL) of the energy storage assembly (5) is lower than zero, controlling the energy storage assembly (5) so as to release energy until the storage current load (SCL) equal to zero is reached;

✔ if the required load variation (Δload) is lower than zero and if the storage current load (SCL) is greater than zero, controlling the energy storage assembly so as to store energy until the equal to zero is reached;
✔ calculating again the required load variation (Δload) on the basis of the requirements of the grid (2) and on the basis of the current net load (CNL) supplied to the grid (2).

15. Method according to claim 13 or 14, wherein the step of calculating the at least one programmable energy source reference load (PLRef1, PLRef2, ...PLRefn) is made exploiting the maximum gradient reachable by the at least one programmable energy source (4).

FIG. 1

FIG. 2

FIG. 3

Europäisches
Patentamt

European
Patent Office

Office européen
des brevets

# EUROPEAN SEARCH REPORT

Application Number

EP 21 42 5027

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/057702 A1 (MØLLER HENRIK, SKJELMOSE MADS RAJCZYK) 26 March 2020 (2020-03-26) * page 14, line 15 - page 19, line 20; figures 1,2,3,4A * * page 22, lines 3-19 * ----- | 1-15 | INV. H02J3/46 H02J3/28 |
| X | WO 2019/120396 A1 (GUPTA MANOJ, KUMAR RAVI, SIVASANKARAN JANAKIRAMAN) 27 June 2019 (2019-06-27) * page 4, line 23 - page 13, line 29; figures 1,2,4 * * page 18, lines 21-30 * ----- | 1,13 | |
| X | US 2016/072291 A1 (GOLDMAN ARNOLD J [IL]) 10 March 2016 (2016-03-10) * paragraphs [0010], [0011], [0072] - [0105]; figures 1-8 * ----- | 1,13 | |

**TECHNICAL FIELDS SEARCHED (IPC)**

H02J

The present search report has been drawn up for all claims

| Place of search | Date of completion of the search | Examiner |
|---|---|---|
| Munich | 15 November 2021 | Bergler, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 21 42 5027

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2021

| Patent document cited in search report | | | Publication date | Patent family member(s) | | | Publication date |
|---|---|---|---|---|---|---|---|
| WO 2020057702 | A1 | | 26-03-2020 | CN | 113039695 | A | 25-06-2021 |
| | | | | EP | 3853964 | A1 | 28-07-2021 |
| | | | | US | 2021336443 | A1 | 28-10-2021 |
| | | | | WO | 2020057702 | A1 | 26-03-2020 |
| WO 2019120396 | A1 | | 27-06-2019 | CN | 111512513 | A | 07-08-2020 |
| | | | | EP | 3729595 | A1 | 28-10-2020 |
| | | | | US | 2021167601 | A1 | 03-06-2021 |
| | | | | WO | 2019120396 | A1 | 27-06-2019 |
| US 2016072291 | A1 | | 10-03-2016 | US | 2016072291 | A1 | 10-03-2016 |
| | | | | WO | 2014174373 | A2 | 30-10-2014 |

EPO FORM P0459

For more details about this annex : see Official Journal of the European Patent Office, No. 12/82